# FASCICULE DE BREVET EUROPEEN

(11) **EP 2 460 045 B1**
(45) Date de publication et mention de la délivrance du brevet: **05.06.2013**
(21) Numéro de dépôt: 10752889.5
(22) Date de dépôt: 28.07.2010
(51) Int. Cl.: G02B 7/02, G02B 7/182, G02B 7/183, H02K 33/00

(54) **DISPOSITIF MOTORISÉ DYNAMIQUEMENT COMPENSÉ D'AJUSTEMENT DE LA POSITION D'UN ÉQUIPAGE MOBILE PAR RAPPORT À UN BÂTI**
DYNAMISCH KOMPENSIERTE MOTORBETRIEBENE VORRICHTUNG ZUR EINSTELLUNG DER POSITION EINES BEWEGLICHEN TEILS IN RELATION ZU EINEM RAHMEN
DYNAMICALLY COMPENSATED MOTOR-DRIVEN DEVICE FOR ADJUSTING THE POSITION OF A MOVING PART RELATIVE TO A FRAME

(30) Priorité: 29.07.2009 FR 0903732
(43) Date de publication de la demande: 06.06.2012
(73) Titulaire: Centre National d'Etudes Spatiales (CNES), 75039 Paris Cedex 01 (FR)
(72) Inventeur: CASTERAS, Christophe, F-31400 Toulouse (FR)
(74) Mandataire: Cabinet BARRE LAFORGUE & associés
(86) Numéro de dépôt international: PCT/FR2010/051602
(87) Numéro de publication internationale: WO 2011/015771

(56) Documents cités:
- US-A- 3 952 217
- US-A- 5 277 076
- US-A- 5 283 682

## Description

L'invention concerne un dispositif motorisé d'ajustement de la position, par rapport à un bâti, d'un premier équipage, dit équipage principal, monté mobile en rotation et/ou en translation par rapport à un support monté sur le bâti.

Dans de nombreux systèmes mécaniques, il est nécessaire d'ajuster la position d'un équipage mobile par rapport à un bâti. On connaît bien sûr de très nombreuses solutions différentes permettant de réaliser cet ajustement, qui consiste en une modification de position selon un ou plusieurs degrés de liberté de l'équipage mobile par rapport au bâti. Le plus souvent, un tel ajustement ne pose pas de difficulté technique particulière, et peut être réalisé par tout actionneur motorisé (vérin hydraulique ou pneumatique, moteur ou servomoteur électrique...) interposé entre l'équipage mobile et le bâti.

Dans certaines applications, notamment dans les systèmes optiques, et plus particulièrement dans les systèmes optiques embarqués sur systèmes spatiaux (satellites artificiels, sondes spatiales,...), il est nécessaire de pouvoir réaliser cet ajustement de position avec une très grande précision, une grande vitesse, et une masse en mouvement relativement importante (typiquement plusieurs centaines de grammes).

En outre, un tel ajustement de position doit par ailleurs être compatible avec son environnement, notamment avec l'environnement spatial, et respectueux de ce dernier. À ce titre, l'inventeur a constaté que les dispositifs motorisés d'ajustement connus ont tous pour effet d'induire des efforts réactionnels sur le bâti, et que cet effet, aussi appelé réjection, bien que considéré jusqu'à maintenant comme absolument inévitable, est inacceptable au sein ou à proximité d'un instrument de très haute précision.

Ainsi, US 5277076 décrit un mécanisme de commande des déplacements en pivotement d'une plate-forme par rapport à un bâti. Un organe de réaction est monté par rapport au bâti selon un axe parallèle à l'axe de pivotement de la plate-forme. Des moteurs portés par le bâti commandent les déplacements en pivotement de l'organe de réaction. Des éléments flexibles métalliques relient mécaniquement l'organe de réaction et la plate-forme de telle sorte que cette dernière se déplace en sens inverse par rapport à l'organe de réaction. Si ce document vise à éviter des réactions sur le bâti, en réalité, les moteurs induisent nécessairement de telles réactions. US 5283682 décrit également une architecture similaire, avec les mêmes inconvénients.

US 3952217 décrit un dispositif pour faire osciller un miroir en minimisant les perturbations sur le véhicule le supportant. Le support de miroir est monté pivotant par rapport à des pieds. Un cadre de contrepoids est également monté pivotant par rapport aux pieds. Des ressorts à lame sont portés par le support de miroir et viennent en butée contre des butées du cadre de contrepoids, de façon à entraîner des déplacements en oscillations de ces deux éléments l'un par rapport à l'autre. Un moteur couple interposé entre le support de miroir et le cadre de contrepoids déclenche les oscillations. Un moteur couple est prévu pour modifier la position angulaire moyenne du cadre de contrepoids par rapport au bâti. Ce dispositif ne permet que des oscillations libres non contrôlées du support de miroir et du cadre de contrepoids l'un par rapport à l'autre. Il ne permet pas de réaliser un ajustement de position de grande précision du support de miroir.

Or, l'inventeur a maintenant déterminé qu'il est en fait possible au contraire de concevoir un dispositif d'ajustement tel que mentionné ci-dessus et qui n'induit aucune perturbation telle que des vibrations ou des contraintes sur le bâti. L'invention vise donc à proposer un tel dispositif motorisé d'ajustement qui présente cette propriété.

L'invention vise également à proposer un tel dispositif qui présente également les qualités mentionnées ci-dessus en termes de précision, de vitesse, et de masse en mouvement.

L'invention vise également à proposer un tel dispositif qui présente une durée de vie et une fiabilité importantes, notamment compatibles avec une exploitation sur un système spatial.

L'invention vise également à atteindre ces buts de façon simple et économique, compatible avec une exploitation à l'échelle industrielle.

Pour ce faire, l'invention concerne un dispositif motorisé d'ajustement de la position, par rapport à un bâti, d'un premier équipage, dit équipage principal, monté mobile selon au moins un degré de liberté en rotation et/ou en translation par rapport à un support monté sur le bâti, comprenant :
- un deuxième équipage, dit équipage de compensation, monté mobile en rotation et/ou en translation par rapport au support de façon à pouvoir être déplacé par rapport à ce dernier selon le(s) même(s) degré(s) de liberté que l'équipage principal mais en sens inverses,
- un dispositif motorisé, dit dispositif d'actionnement compensé, relié à l'équipage principal et à l'équipage de compensation, ce dispositif d'actionnement compensé étant indépendant du bâti et du support, et adapté pour pouvoir déplacer l'équipage principal et l'équipage de compensation l'un par rapport à l'autre en sens inverses selon chaque degré de liberté par rapport au support, l'équipage de compensation et le dispositif d'actionnement compensé étant adaptés pour minimiser la résultante des efforts de réaction induits sur le support par les déplacements de l'équipage principal et de l'équipage de compensation par rapport au support,
   caractérisé :
- en ce que le dispositif d'actionnement compensé est adapté pour imposer une position relative de l'équipage de compensation par rapport à l'équipage principal,
- et en ce qu'il comporte un dispositif de rappel de l'équipage principal en une position, dite position nominale, par rapport au support et/ou un dispositif de rappel de l'équipage de compensation en une position, dite position nominale, par rapport au support, le(s) dispositif(s) de rappel étant adapté(s) pour autoriser les déplacements relatifs de l'équipage principal et de l'équipage de compensation l'un par rapport à l'autre et par rapport au support sous l'effet du dispositif d'actionnement compensé, le(s) dispositif(s) de rappel étant aussi adapté(s) pour minimiser la résultante des efforts de réaction induits sur le support par les déplacements de l'équipage principal et de l'équipage de compensation par rapport au support.

Il est à noter que la résultante des efforts réactionnels induits sur le support par les déplacements des équipages mobiles principal et de compensation, peut être minimisée de différentes manières, l'équipage de compensation, le dispositif d'actionnement motorisé compensé et chaque dispositif de rappel pouvant faire l'objet d'un très grand nombre (en réalité une infinité) de variantes structurelles et fonctionnelles, chacune d'entre elles pouvant être conçue, selon le principe général de la dynamique, de façon à présenter une telle résultante réactionnelle minimale, et même théoriquement nulle. En particulier, pour obtenir une résultante réactionnelle nulle, on peut agir soit sur les propriétés inertielles de l'équipage de compensation (masse, moments d'inertie) par rapport à celles de l'équipage principal, soit sur les trajectoires et accélérations (linéaires et/ou en rotation) induites par le dispositif d'actionnement compensé sur l'équipage de compensation par rapport à celles de l'équipage principal, soit à la fois sur les propriétés inertielles et sur les trajectoires et accélérations de l'équipage de compensation. Si les propriétés inertielles sont les mêmes, les accélérations des deux équipages par rapport au support sont les mêmes.

Si les propriétés inertielles sont différentes, les accélérations des deux équipages par rapport au support sont également différentes. Dans ce cas, le dispositif d'actionnement compensé est lui-même déplacé par rapport au support et participe à la compensation. Par exemple, il peut être avantageux - notamment dans le cas d'un dispositif embarqué tel qu'un système spatial- de prévoir un équipage de compensation de masse plus faible, et cela afin de minimiser la masse totale de l'ensemble.

Le dispositif d'actionnement compensé est relié aux deux équipages mobiles (équipage principal et équipage de compensation) de façon à imposer à tout instant leurs positions relatives et à permettre de les déplacer l'un par rapport à l'autre conformément à l'invention. Avantageusement, le dispositif d'actionnement compensé est relié uniquement à ces deux équipages mobiles, c'est-à-dire interposé au moins fonctionnellement entre ces deux équipages mobiles (et même de préférence structurellement, chaque actionneur de ce dispositif d'actionnement compensé s'étendant entre les deux équipages mobiles, même si d'autres dispositions structurelles sont possibles pour exercer la même fonction). Réciproquement, les deux équipages mobiles ne sont reliés l'un à l'autre que par l'intermédiaire du dispositif d'actionnement compensé. Dès lors, le dispositif d'actionnement compensé fonctionnellement interposé entre les deux équipages mobiles ne prenant pas appui sur le support, ni sur le bâti portant ce support, le plus simple est de prévoir un montage tel que les trajectoires des deux équipages mobiles (équipage principal et équipage de compensation) qui sont tous les deux guidés par rapport au support selon chaque degré de liberté choisi, s'effectuent lors des déplacements de ces derniers selon les mêmes degrés de liberté par rapport au support et en sens inverses, et avec les mêmes valeurs absolues d'efforts inertiels et/ou de couples inertiels (toutes deux induites par le dispositif d'actionnement compensé interposé entre les équipages mobiles). Pour obtenir ces mêmes valeurs absolues d'efforts inertiels et/ou de couples inertiels, on peut soit prévoir que l'équipage de compensation présente les mêmes propriétés inertielles (masse et/ou moment(s) d'inertie) que l'équipage principal par rapport à ses modes de déplacement par rapport au support, soit, si les propriétés inertielles de ces deux équipages sont différentes, des valeurs absolues d'accélérations qui sont différentes pour compenser les différences entre les propriétés inertielles. Par exemple, il est avantageux, notamment dans un système embarqué tel qu'un système spatial, de prévoir un équipage de compensation présentant une masse plus faible, et de prévoir que le dispositif d'actionnement compensé soumette cet équipage de compensation à des accélérations, par rapport au support, de valeurs absolues plus importantes que celles de l'équipage principal.

Le(s) dispositif(s) de rappel en position nominale par rapport au support est(sont) de préférence adapté(s) pour présenter une résultante réactionnelle nulle (au moins théoriquement) sur le support lors des déplacements de l'équipage principal et de l'équipage de compensation. Chaque dispositif de rappel pouvant être constitué d'une pluralité d'éléments de rappel, il suffit pour ce faire de prévoir que ces différents éléments présentent des caractéristiques mécaniques adaptées -notamment, dans le cas d'éléments de rappel élastique, une raideur adaptée- à leur déformation découlant du déplacement des équipages mobiles. De préférence, le dispositif selon l'invention comprend un dispositif de rappel -notamment de rappel élastique- de l'équipage principal en position nominale par rapport au support, et un dispositif de rappel - notamment de rappel élastique- de l'équipage de compensation en position nominale par rapport au support, et lesdits dispositifs de rappel sont adaptés pour exercer des efforts de rappel de même amplitude et de sens inverses en toute position de l'équipage principal et de l'équipage de compensation. En variante, il est possible de prévoir uniquement à un rappel élastique de l'équipage de compensation par rapport au support, ou uniquement un rappel élastique de l'équipage principal par rapport au support. L'ensemble formé par chaque dispositif de rappel a donc pour effet d'une part d'imposer à tout instant une position (sans dérive) à l'ensemble formé de l'équipage principal et de l'équipage de compensation par rapport au support, d'autre part d'autoriser les déplacements relatifs de ces deux équipages l'un par rapport à l'autre et par rapport au support.

Avantageusement et selon l'invention, l'équipage de compensation présente les mêmes propriétés inertielles (masse, moment(s) d'inertie) que l'équipage principal par rapport à ses modes de déplacement (degré(s) de liberté) par rapport au support. Les propriétés inertielles des deux équipages mobiles étant les mêmes, les accélérations induites par rapport au support par le dispositif d'actionnement compensé sur ces deux équipages mobiles sont les mêmes, et la résultante des efforts de réaction induits par leurs déplacements par rapport au support est théoriquement nulle.

Cela étant, en pratique, il reste possible que la réalisation du dispositif selon l'invention puisse présenter certaines imperfections d'équilibrages, de dissymétries des bras de levier, d'imperfections dans les liaisons... Dès lors, la résultante réactionnelle impartie par les déplacements des équipages mobiles sur le support n'est pas en réalité strictement nulle, même si le montage est réalisé de façon qu'elle soit théoriquement nulle. Ces imperfections (qui sont du deuxième ordre par rapport à la compensation dynamique induite par l'équipage de compensation) peuvent être elles-mêmes compensées par un montage approprié du support sur le bâti, de façon à empêcher la transmission d'efforts réactionnels sur ce dernier.

Ainsi, avantageusement, un dispositif selon l'invention est aussi caractérisé en ce que le support est lui-même monté mobile par rapport au bâti selon le(s) même(s) degré(s) de liberté de montage de l'équipage principal et de l'équipage de compensation par rapport au support, et en ce qu'il comprend un mécanisme de montage du support sur le bâti, ce mécanisme de montage reliant le support au bâti et comprenant au moins un organe de rappel -notamment de rappel élastique- du support en une position, dite position nominale, par rapport au bâti. Avantageusement et selon l'invention, ledit mécanisme de montage est adapté pour absorber au moins pour partie les efforts de réactions résiduels impartis sur le support par les déplacements de l'équipage principal et de l'équipage de compensation selon chaque degré de liberté.

Un tel mécanisme de montage permet au moins dans une certaine mesure des déplacements relatifs du support par rapport au bâti. Un tel organe de rappel permet ainsi une compensation de type passif (non motorisée).

En variante ou en combinaison, ledit mécanisme de montage peut être du type actif, c'est-à-dire incorporer au moins un dispositif d'actionnement motorisé, de préférence asservi en position. Ainsi, avantageusement et selon l'invention, ledit mécanisme de montage comprend au moins un actionneur motorisé apte à ajuster la position du support par rapport au bâti, au moins un capteur d'efforts adapté pour délivrer un signal représentatif des efforts de réaction résiduels impartis sur le support par les déplacements de l'équipage principal et de l'équipage de compensation selon chaque degré de liberté, et un dispositif d'asservissement adapté pour délivrer un signal de commande de chaque actionneur motorisé de façon à modifier la position du support par rapport au bâti pour minimiser la transmission desdits efforts de réaction sur le bâti. Un tel actionneur motorisé peut être par exemple formé d'un actionneur piézo-électrique, d'un actionneur électromagnétique, ou d'un servo moteur électrique entraînant un système vis sans fin/écrou (par exemple une vis à billes), ou d'un vérin, ou d'un moteur électrique...

Par ailleurs, qu'il soit du type passif, ou au moins partiellement actif, voire totalement actif, avantageusement et selon l'invention, ledit mécanisme de montage comprend au moins un organe amortisseur reliant le support et le bâti -notamment interposé entre le support et le bâti-. Un tel organe amortisseur permet d'éviter tout phénomène d'oscillations du support par rapport au bâti.

Par ailleurs, l'invention s'applique aussi bien quels que soient les différents degrés de liberté des équipages mobiles. En particulier, dans une première variante, un dispositif selon l'invention est un dispositif d'ajustement en translation et est caractérisé en ce que l'équipage principal et l'équipage de compensation sont tous deux montés mobiles en translation selon un même axe de translation par rapport au support. L'équipage de compensation présente avantageusement la même masse que l'équipage principal, ou, en variante, une masse différente.

Dans cette première variante, de préférence, le dispositif selon l'invention est aussi caractérisé en ce que le centre de gravité de l'équipage principal et le centre de gravité de l'équipage de compensation sont situés sur l'axe de translation. Le dispositif d'actionnement compensé peut comprendre un actionneur unique s'étendant selon l'axe de translation, ou une pluralité d'actionneurs uniformément répartis autour de l'axe de translation (et de préférence le long de ce dernier) et parallèles à l'axe de translation.

Selon une deuxième variante (qui peut être combinée à la précédente), un dispositif selon l'invention est un dispositif d'ajustement en rotation et est caractérisé en ce que l'équipage principal et l'équipage de compensation sont tout deux montés en rotation autour d'un axe de rotation par rapport au support. L'équipage de compensation présente le même moment d'inertie que l'équipage principal selon cet axe de rotation, ou, en variante, un moment d'inertie différent. En outre, dans cette deuxième variante, le dispositif d'ajustement en rotation selon l'invention est de préférence globalement équilibré autour de l'axe de rotation. En particulier, un dispositif d'ajustement en rotation selon l'invention est caractérisé en ce que l'équipage principal est équilibré autour de l'axe de rotation, en ce que l'équipage de compensation est équilibré autour de l'axe de rotation, et en ce que le dispositif d'actionnement compensé comprend une pluralité d'actionneurs uniformément répartis autour de l'axe de rotation.

Avantageusement et selon l'invention, le dispositif d'actionnement compensé comprend au moins un actionneur motorisé choisi parmi un actionneur piézo-électrique, un actionneur électromagnétique, un servo moteur électrique entraînant un système vis sans fin/écrou (par exemple une vis à billes), un vérin, un moteur électrique. Un tel actionneur motorisé a en particulier pour effet d'imposer à tout instant une position relative déterminée entre l'équipage principal et l'équipage de compensation. Il permet cependant un ajustement de cette position relative, de façon extrêmement précise et sur une course qui peut être très faible.

Un actionneur piézo-électrique présente notamment comme avantage d'être exempt de pièces en mouvement, de ne pas être sujet à l'usure, de présenter une très grande précision et une très grande vitesse, de présenter un très grand rendement mécanique (effort développé par rapport à sa masse) et d'être compatible avec les systèmes optiques (absence de poussières et de pollutions liquides ou gazeuses) et avec l'environnement spatial.

Avantageusement et selon l'invention, chaque actionneur du dispositif d'actionnement compensé est monté à chacune de ses extrémités par une liaison pivot ou rotule.

Par ailleurs, avantageusement et selon l'invention, le dispositif d'actionnement compensé comprend au moins un organe amortisseur reliant le support et l'équipage principal et au moins un organe amortisseur reliant le support et l'équipage de compensation. Les différents organes amortisseurs présentent des caractéristiques équivalentes pour ne pas déséquilibrer l'ensemble mobile. Un organe amortisseur entre les équipages mobiles et le support permet d'amortir les effets du dispositif de rappel en position nominale et d'éviter les oscillations.

En outre, avantageusement, un dispositif selon l'invention comprend au moins un capteur de position adapté pour délivrer un signal représentatif de la position de l'équipage principal par rapport au bâti, et/ou au moins un capteur de position adapté pour délivrer un signal représentatif de la position de l'équipage de compensation par rapport au bâti, et/ou au moins un capteur de position adapté pour délivrer un signal représentatif de la position du support par rapport au bâti. Chaque signal de mesure de la position absolue de chaque équipage mobile et/ou du support par rapport au bâti peut être fourni à une unité de commande et être pris en compte par cette dernière pour élaborer un signal d'ajustement compensé pour le dispositif d'actionnement compensé.

Dans une application particulièrement avantageuse de l'invention, un dispositif selon l'invention est intégré dans un instrument optique en vue de réaliser l'ajustement de la position d'au moins un système optique (par exemple au moins une lentille et/ou au moins un miroir et/ou au moins un écran obturateur), par exemple en rotation autour d'un axe orthogonal à l'axe optique du système optique et/ou en translation selon l'axe optique ou selon un axe transverse ou autre. L'invention s'étend donc à un instrument optique comprenant au moins un système optique présentant un axe optique, caractérisé en ce qu'il comprend au moins un dispositif selon l'invention d'ajustement de la position d'un organe du système optique par rapport à un bâti.

Par exemple, un instrument optique selon l'invention est un interféromètre, et ledit système optique est une lentille compensatrice de l'une des branches de l'interféromètre dont l'angle par rapport à l'axe optique de la branche doit pouvoir être modifié afin de régler de façon très fine le trajet optique dans cette branche. L'instrument optique sur l'invention comprend donc un dispositif selon l'invention d'ajustement en rotation de cette lentille compensatrice.

L'invention peut faire l'objet d'autres applications.

L'invention concerne également un dispositif d'ajustement de position et un instrument optique caractérisés en combinaison par tout ou partie des caractéristiques mentionnées ci-dessus ou ci-après.

D'autres buts, caractéristiques et avantages de l'invention apparaîtront à lecture de la description suivante qui se réfère aux figures annexées dans lesquelles :
- la figure 1 est un schéma en élévation d'un premier mode de réalisation d'un dispositif selon l'invention,
- la figure 2 est un schéma en coupe selon la ligne II-II de la figure 1,
- la figure 3 est un schéma en élévation d'un deuxième mode de réalisation d'un dispositif selon l'invention,
- la figure 4 est un schéma en coupe selon la ligne IV-IV de la figure 3,
- la figure 5 est un schéma en élévation d'un troisième mode de réalisation d'un dispositif selon l'invention,
- la figure 6 est un schéma en élévation d'un quatrième mode de réalisation d'un dispositif selon l'invention,
- la figure 7 est un schéma en élévation d'un cinquième mode de réalisation d'un dispositif selon l'invention,
- la figure 8 est un schéma synoptique d'un exemple d'automatisme dans un dispositif selon l'invention.

Il est à noter que les figures sont uniquement schématiques et ne préjugent en aucune manière des dispositions constructives éventuellement nécessaires pour procéder au montage les uns par rapport aux autres des différents équipages, éléments et organes constituant le dispositif selon l'invention, ou pour permettre leurs déplacements relatifs selon chaque degré de liberté (évidements, assemblages de plusieurs pièces...).

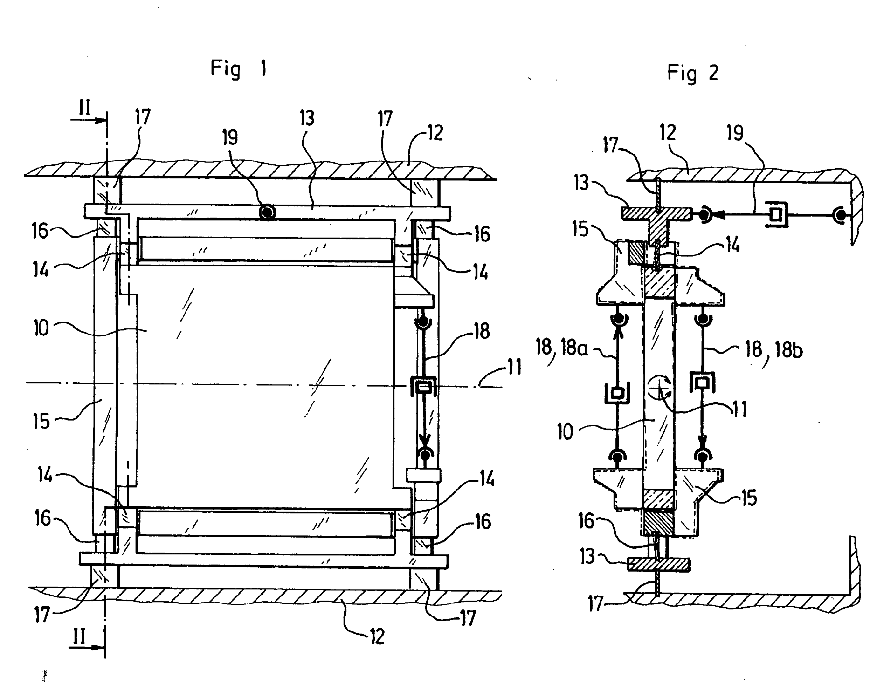

Le dispositif selon un mode de réalisation de l'invention représenté schématiquement sur les figures 1 et 2 permet l'ajustement d'une plaque 10 rigide, faisant office d'équipage principal 10, en rotation par rapport à un bâti 12 autour d'un axe 11 horizontal médian de la plaque 10, parallèle à son plan principal.

La plaque 10 est montée sur un support intermédiaire 13 et supportée par ce dernier par l'intermédiaire de lames 14 souples et élastiques en flexion s'étendant dans un plan vertical contenant l'axe 11. Les lames 14 sont rigides en compression longitudinale verticale de façon à maintenir verticalement en position la plaque 10 par rapport au support 13. Elles sont également rigides en flexion dans le sens de leur largeur, c'est-à-dire autour de tout axe de flexion orthogonal à leur plan principal. Les lames 14 sont par exemple formées de plaquettes métalliques en cuprobérilium souples élastiques. Elles permettent de faire pivoter la plaque 10 autour de l'axe 11 avec une certaine amplitude, et rappellent élastiquement cette plaque 10 en position verticale nominale en rotation selon l'axe 11.

Un cadre 15 faisant office d'équipage de compensation 15 est aussi monté sur le support 13 et supporté par ce dernier par l'intermédiaire de lames 16 souples et élastiques en flexion s'étendant aussi dans un plan vertical contenant l'axe 11 et qui sont similaires aux lames 14 de montage de la plaque 10 par rapport au support 13. Les lames 16 rappellent élastiquement le cadre 15 de compensation en position verticale nominale en rotation selon l'axe de 11. Les lames 14, 16 de rappel élastique de la plaque 10 et, respectivement, du cadre 15, sont adaptées pour exercer des forces de rappel de même amplitude, de façon à être parfaitement équilibrées, la résultante des efforts de réaction induits par ces dispositifs de rappel sur le support 13 étant théoriquement nulle. L'équipage principal 10 formé par la plaque 10 et l'équipage de compensation 15 formé par le cadre 15 sont de préférence parfaitement équilibrés autour de l'axe de rotation 11, sans balourd.

Le cadre 15 de compensation est avantageusement dimensionné de façon à présenter, par rapport à l'axe 11, le même moment d'inertie que la plaque 10. Dans la variante représentée, il est disposé de façon à s'étendre, en position verticale nominale, globalement dans le même plan vertical contenant l'axe de 11 que la plaque 10. Les portions horizontales du cadre 15 présentent des coudes au droit des passages des lames 14 de montage de la plaque 10 par rapport au support 13.

Le support 13 est lui-même monté sur le bâti 12 et supporté par ce dernier par l'intermédiaire de lames 17 souples et élastiques en flexion s'étendant aussi dans un plan vertical passant par l'axe 11 et qui sont similaires aux lames 14 de montage de la plaque 10 par rapport au support 13. Les lames 17 rappellent élastiquement le support 13 par rapport au bâti 12 en position verticale nominale en rotation selon l'axe 11.

Par ailleurs, au moins un actionneur linéaire 18, par exemple du type piézo-électrique ou électromagnétique ou autre, est interposé entre la plaque 10 et le cadre 15 de façon à pouvoir déplacer la plaque 10 et le cadre 15 l'un par rapport à l'autre en sens inverses en rotation autour de l'axe 11. Dans l'exemple représenté, deux actionnaires linéaires 18a, 18b sont interposés entre la plaque 10 et le cadre 15, un de chaque côté de la plaque 10. Chaque actionneur linéaire 18a, 18b est actif essentiellement dans le sens de son extension, de façon à entraîner un déplacement de la plaque 10 par rapport au cadre 15 en rotation autour de l'axe de 11, le montage étant adapté pour que les deux actionneurs linéaires 18a, 18b entraînent des déplacements dans le même sens de rotation. Chaque actionneur linéaire 18 est relié à chacune des extrémités à la plaque 10 et, respectivement au cadre 15, par une liaison rotule ou une liaison pivot de façon à permettre les déplacements relatifs de la plaque 10 par rapport au cadre 15 autour de l'axe de 11.

Chaque actionneur linéaire 18 est relié uniquement à la plaque 10 et au cadre 15, c'est-à-dire n'est pas relié au support 13 ni au bâti 12 et ne prend pas appui sur ces derniers. En conséquence, lorsque les actionneurs linéaires 18a, 18b sont activés, ils entraînent des déplacements de la plaque 10 par rapport au cadre 15 et de ces deux équipages mobiles 10, 15 par rapport au support 13, mais la résultante des efforts de réactions induits par ces déplacements sur le support 13 est théoriquement nulle, et en pratique minimum et négligeable. De même, la résultante des efforts de réaction des lames 14, 16 ressort de rappel de la plaque 10 par rapport au support et du cadre 15 par rapport au support, est théoriquement nulle. Chaque actionneur linéaire 18a, 18b peut être formé par exemple d'un actionneur piézo-électrique amplifié ou non, par exemple tel que commercialisé par la société CEDRAT Technologies, Meylan, France.

Sur la figure 2, les positions relatives de la plaque 10 et du cadre 15 après activation des actionneurs linéaires 18a, 18b ont été représentées en traits pointillés. Les déplacements de la plaque 10 et du cadre 15 s'effectuent selon les mêmes degrés de liberté (en rotation autour de l'axe de 11 dans l'exemple représenté sur les figures 1 et 2), en sens inverses, et, du fait de l'égalité des moments d'inertie, avec les mêmes amplitudes et les mêmes accélérations.

Par ailleurs, la position nominale verticale du support 13 par rapport au bâti 12 autour de l'axe de 11 est également contrôlée et éventuellement ajustée par au moins un actionneur linéaire 19 interposé entre le support 13 et le bâti 12 permettant de faire pivoter le support 13 par rapport au bâti 12 autour de l'axe 11. Chaque actionneur linéaire 19 peut être formé d'un actionneur piézo-électrique ou électromagnétique ou autre. Il est également monté, par chacune de ses extrémités, au support 13 et, respectivement au bâti 12, par une liaison rotule ou une liaison pivot adaptée pour permettre les déplacements relatifs appropriés.

L'actionneur linéaire 19 maintient le support 13 en position par rapport au bâti 12 selon l'axe 11 en permettant un réglage de sa position, et donc de celle de la plaque 10, par rapport à l'axe 11. Les actionneurs linéaires 18 du dispositif d'actionnement compensé permettent ensuite un réglage plus fin de la position de la plaque 10 par rapport au support 13, et donc par rapport au bâti 12. Ce réglage plus fin est effectué sensiblement sans transmission d'efforts de réactions sur le bâti 12 grâce au cadre 15 de compensation et au fait que les actionneurs linéaires 18 sont interposés entre ce cadre 15 et la plaque 10.

La plaque 10 peut être par exemple une lentille ou un miroir ou une lame transparente ou semi transparente d'un système optique, par exemple d'un interféromètre, dont la position angulaire par rapport à l'axe 11 doit être contrôlée et ajustée très précisément mais avec une grande vitesse, typiquement en moins de 10 ms, malgré une masse en mouvement relativement importante, qui peut être par exemple de plusieurs centaines de grammes. Le dispositif selon l'invention peut également être réalisé de façon entièrement compatible avec son montage dans un environnement spatial.

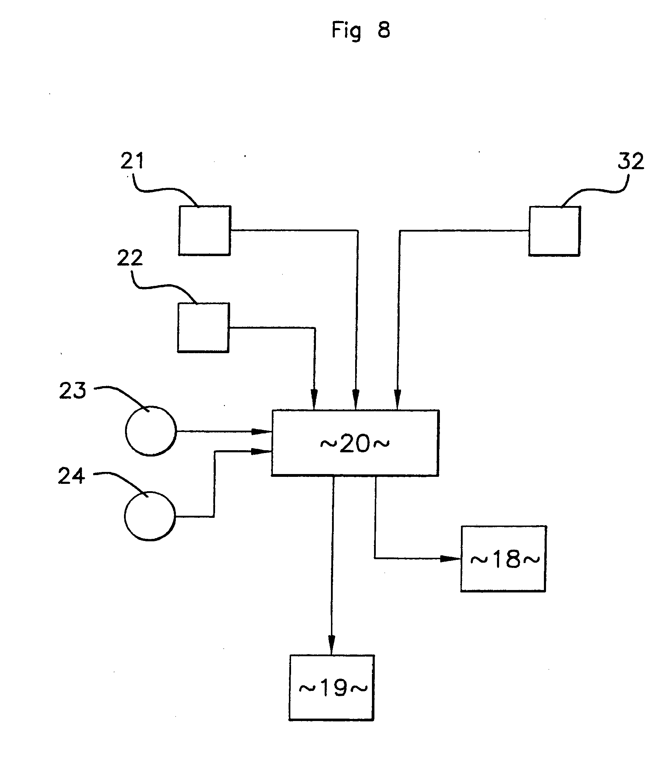

Chacun des actionneurs 18, 19 peut être activé par l'intermédiaire de signaux de commande élaborés par une unité de commande 20 (figure 8) appropriée qui reçoit par ailleurs des signaux de détection de position émis par au moins un capteur de position 21 de la plaque 10 par rapport au bâti 12 et/ou au moins un capteur de position 22 du cadre 15 par rapport au bâti 12 et/ou au moins un capteur de position 32 du support 13 par rapport au bâti 12. De préférence, chaque capteur de position 21, 22 est de type sans contact de façon à ne pas générer de réactions parasites, par exemple un capteur linéaire de type capacitif, inductif ou optique (règle optique) ou un capteur angulaire de type potentiomètre, à effet Hall ou un codeur optique.

L'unité de commande 20 peut être adaptée pour délivrer un signal de commande de chaque actionneur 19 de contrôle de la position du support 13 par rapport au bâti 12 de façon à modifier la position du support 13 par rapport au bâti 12 pour minimiser la transmission sur le bâti 12 des efforts de réactions résiduels éventuels résultant des déplacements de la plaque 10, par exemple en cas de défaut d'équilibrage ou de frottements relatifs intempestifs. Pour ce faire, avantageusement (variante non représentée), au moins un capteur d'efforts linéaire de type peson, jauge extensométrique (sur les lames élastiques) ou piézoélectrique, et/ou au moins un capteur d'efforts angulaire de type couplemètre à jauge etc., est prévu pour délivrer un signal représentatif des efforts de réactions impartis sur le support 13 par le déplacement de la plaque 10 et du cadre 15 de compensation. En outre, l'unité de commande 20 présente un dispositif d'asservissement de position et d'effort, par exemple de type PID (proportionnel, intégral, dérivé) ou autre adapté pour commander la modification de la position du support 13 par rapport au bâti 12 de façon à positionner finement le support par rapport au bâti et minimiser la transmission des dits efforts de réactions ainsi mesurés.

L'unité de commande 20 reçoit également avantageusement des signaux de consignes de position, à savoir d'une part un signal 23 de consigne de position de la plaque 10 par rapport au bâti 12, d'autre part, éventuellement, un signal 24 de consigne de position du support 13 par rapport au bâti 12.

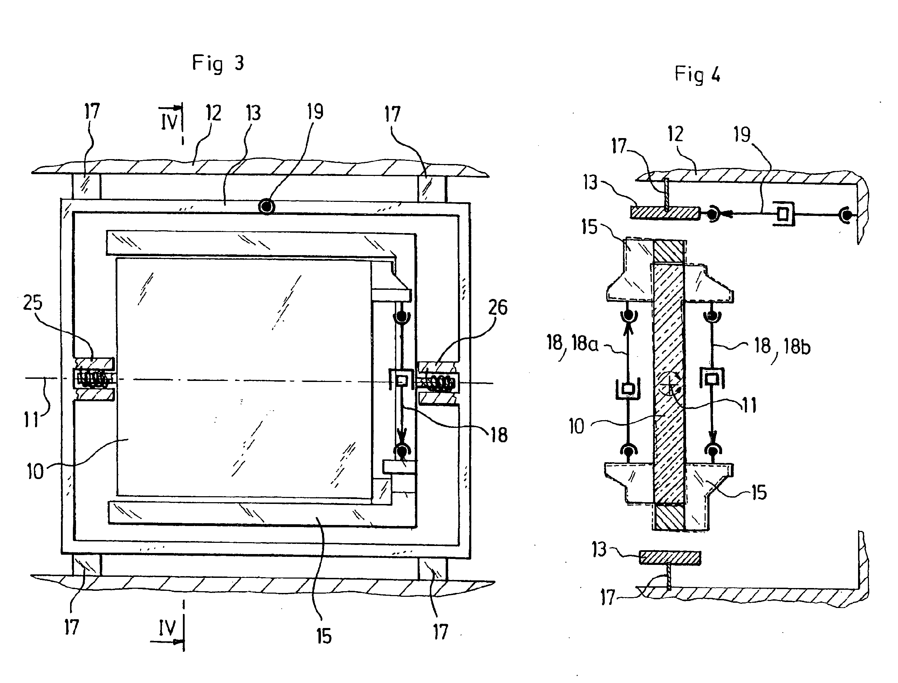

Le deuxième mode de réalisation représenté schématiquement sur les figures 3 et 4 est similaire au précédent, mais en diffère essentiellement par le fait que la plaque 10 et le cadre 15 de compensation sont montés par rapport au support 13 non pas par des lames élastiques 14, 16, mais par des liaisons pivot 25, respectivement 26, par exemple formées de pivots élastiques ou de paliers (paliers à roulements à billes ou à rouleaux ou autres, ou paliers lisses) incorporant au moins un ressort spiral de rappel en rotation en position nominale verticale.

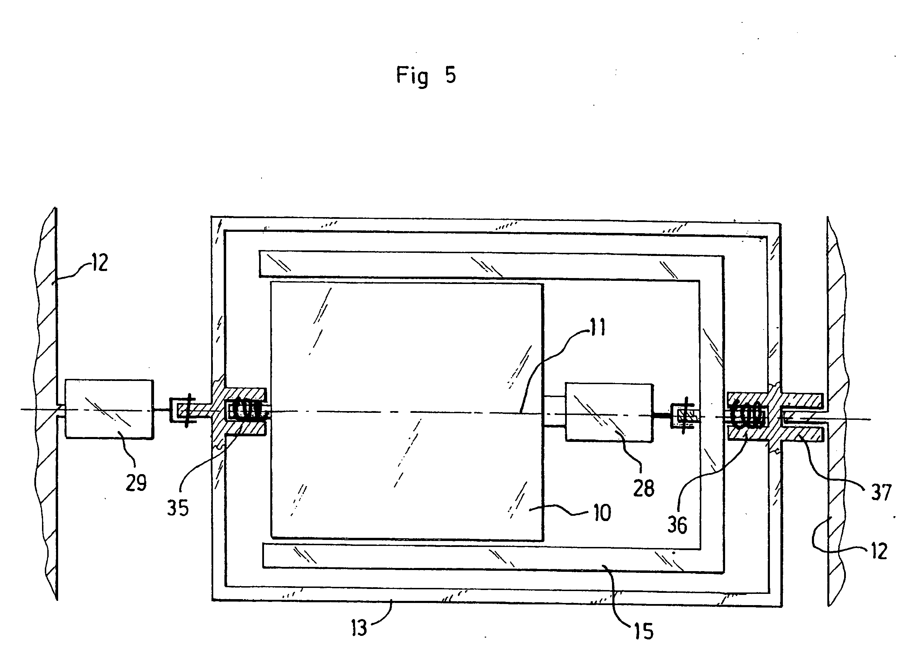

Le troisième mode de réalisation représenté schématiquement figure 5 diffère du précédent par le fait que les actionneurs 18, 19 et les lames 17 de montage du support 13 sur le bâti 12 sont remplacés par des moteurs électriques 28, 29 et des liaisons pivot 35, 36, 37, à savoir un moteur électrique 28 entraînant la plaque 10 par rapport au cadre 15 de compensation, et un moteur électrique 29 entraînant le support 13 par rapport au bâti 12, avec une liaison pivot 35 à rappel élastique (pivot élastique ou palier à ressort spiral) entre la plaque 10 et le support 13, une liaison pivot 36 élastique (pivot élastique ou palier à ressort spiral) entre le cadre 15 et le support 13, et une liaison pivot 37 entre le support 13 et le bâti 12, cette dernière incorporant ou non un rappel élastique. Le moteur électrique 29 peut être utilisé pour régler la position nominale verticale du support 13 par rapport au bâti 12, et également pour absorber les éventuels efforts de réactions existants (au second ordre) malgré la compensation dynamique.

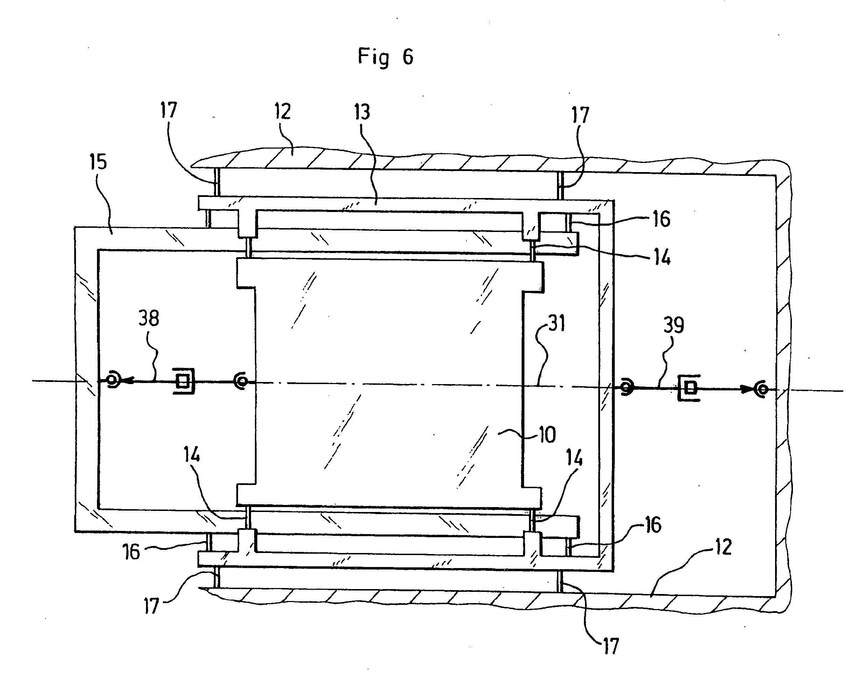

Dans le quatrième mode de réalisation représenté schématiquement figure 6, les lames élastiques 14, 16, 17 du premier mode de réalisation sont disposées de façon à s'étendre globalement orthogonalement au plan de la plaque 10, du cadre 15 et du support 13, ces trois organes étant globalement coplanaires, de façon à être guidés en translation selon un axe 31 horizontal. Un actionneur linéaire 38 formant dispositif d'actionnement compensé, par exemple du type piézo-électrique ou électromagnétique ou autre, est interposé entre la plaque 10 et le cadre 15 de compensation et relie ces deux organes l'un à l'autre de telle sorte que lorsqu'il est activé, la plaque 10 et le cadre 15 sont déplacés en translation selon l'axe 31 l'un par rapport à l'autre en sens inverses. De même, un actionneur linéaire 39, par exemple du type piézo-électrique ou électromagnétique ou autre, est interposé entre le support 13 et le bâti 12 et relie ces deux organes l'un à l'autre de telle sorte que lorsqu'il est activé, le support 13 est déplacé en translation selon l'axe 31 par rapport au bâti 12.

Le cadre 15 de compensation présente avantageusement la même masse que la plaque 10, et leurs centres de gravité sont alignés sur l'axe 31 de translation, de façon que la résultante des efforts de réaction soit théoriquement nulle lorsque que l'actionneur 38 est activé et que la plaque 10 est déplacée en translation, ainsi que le cadre 15 de compensation, par rapport au support 13.

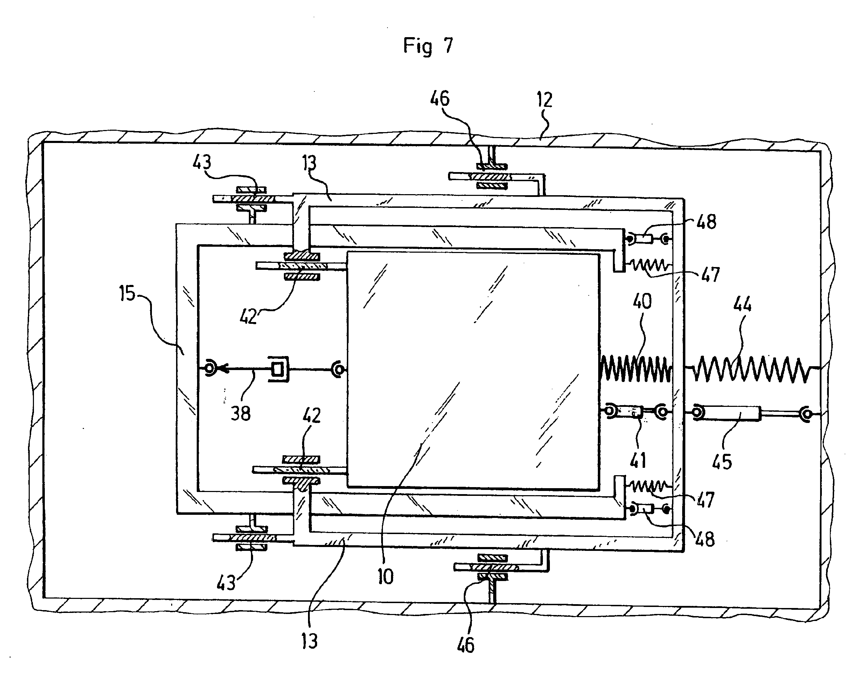

La figure 7 représente schématiquement le principe d'un cinquième mode de réalisation dans lequel les guidages en translation sont réalisés par des liaisons glissières (pouvant être réalisées par toutes structures appropriées connues en elles-mêmes, (par exemple coulisseau(x) dans une ou plusieurs glissière(s), galet(s) coopérant avec un ou plusieurs rail(s),...)). La plaque 10 est guidée par rapport au support 13 par une liaison glissière 42 et rappelée en position nominale le long de l'axe 31 par un ressort 40 associé à un amortisseur 41 (développant une force résistante fonction de la vitesse) permettant d'éviter les oscillations. Le cadre 15 de compensation est guidé par rapport au support 13 par une liaison glissière 43 et rappelé en position nominale le long de l'axe 31 par au moins un ressort 47 associé à au moins un amortisseur 48 (développant une force résistante fonction de la vitesse) permettant d'éviter les oscillations. L'actionneur 38 est interposé entre la plaque 10 et le cadre 15 comme dans le quatrième mode de réalisation. Chaque ressort, chaque amortisseur et chaque actionneur est disposé de façon à ce que la résultante de l'ensemble des efforts de réactions induits soit théoriquement nulle. En particulier, ils sont disposés selon l'axe de translation ou de façon symétrique de part et d'autre de l'axe de translation et les éléments (ressorts, amortisseurs, ou actionneurs) symétriques les uns des autres présentent les mêmes caractéristiques mécaniques.

Le support 13 est guidé en translation selon l'axe 31 par rapport au bâti 12 par des liaisons glissières 46. L'actionneur 39 du quatrième mode de réalisation est remplacé par un ressort 44 et un amortisseur 45 interposés entre le support 13 et le bâti 12. Le ressort 44 et l'amortisseur 45 sont adaptés pour absorber les éventuels efforts de réactions résiduels du second ordre et éviter leur transmission au bâti 12, lors des déplacements en translation de la plaque 10 et du cadre 15 de compensation.

Il va de soi que l'invention peut faire l'objet de nombreuses variantes de réalisation par rapport aux différents modes de réalisation représentés sur les figures et décrits ci-dessus dans leur principe général, et dont les différentes caractéristiques peuvent d'ailleurs être combinées. Par exemple, rien n'empêche de prévoir des éléments amortisseurs en association à chaque actionneur ou organe de rappel élastique, en particulier avec les lames élastiques ou les liaisons pivot à rappel élastique. Les organes de rappel élastique peuvent être remplacés ou complétés par d'autres moyens de rappel, par exemple des organes de rappel magnétique, ou des organes de rappel électromagnétique...

Également, les actionneurs utilisés peuvent être aussi bien des actionneurs linéaires piézo-électriques ou électromagnétiques ou autres, ou des moteurs électriques linéaires ou rotatifs ou autres.

L'équipage principal formé de la plaque 10 peut être remplacé par un système beaucoup plus complexe formé d'une pluralité de pièces. De même, l'équipage de compensation 15 formé par le cadre 15 peut être remplacé par un système beaucoup plus complexe formé d'une pluralité de pièces. Les propriétés inertielles de l'équipage de compensation vis-à-vis de chaque degré de liberté ne sont pas nécessairement les mêmes que celles de l'équipage principal. Dans ce cas, les déplacements et accélérations des deux équipages mobiles par rapport au support sont alors différents. Les efforts inertiels et/ou les couples inertiels sont cependant égaux et la résultante des efforts de réactions induits sur le support par ces déplacements est théoriquement nulle, du fait de l'équilibrage du(des) dispositif(s) de rappel.

Les équipages mobiles 10, 15 peuvent être mobiles en rotation selon plusieurs axes distincts et/ou en translation selon plusieurs axes distincts. Selon chaque degré de liberté, leurs propriétés inertielles (moment(s) d'inertie et/ou masse) sont les mêmes ou sont différentes.

Le dispositif d'actionnement compensé et l'équipage de compensation (cadre 15) exercent la double fonction d'une part de permettre un contrôle de la position de l'équipage principal (plaque 10) et son ajustement par rapport au bâti 12, et, d'autre part, une compensation dynamique annulant en théorie et en tout cas minimisant en pratique la résultante des efforts de réactions induits sur le support 13 par les déplacements de l'équipage principal.

L'invention s'applique en particulier à un instrument optique comprenant au moins un système optique présentant un axe optique. Cet instrument optique comprend au moins un dispositif selon l'invention pour l'ajustement de la position d'au moins un organe du système optique par rapport au bâti 12, par exemple pour l'ajustement d'une lentille ou d'un miroir parallèlement ou orthogonalement à son axe optique, ou pour l'ajustement en rotation d'une lame ou d'un miroir modifiant le trajet optique d'une branche d'un interféromètre.

## Revendications

1. Dispositif motorisé d'ajustement de la position, par rapport à un bâti (12), d'un premier équipage, dit équipage principal (10), monté mobile selon au moins un degré de liberté en rotation et/ou en translation par rapport à un support (13) monté sur le bâti (12), comprenant :
- un deuxième équipage, dit équipage de compensation (15), monté mobile en rotation et/ou en translation par rapport au support (13) de façon à pouvoir être déplacé par rapport à ce dernier selon le(s) même(s) degré(s) de liberté que l'équipage principal (10) mais en sens inverses,
et **caractérisé en ce qu'**il comprend :
- un dispositif motorisé, dit dispositif (18, 28, 38) d'actionnement compensé, relié à l'équipage principal (10) et à l'équipage de compensation (15), ce dispositif (18, 28, 38) d'actionnement compensé étant indépendant du bâti (12) et du support (13), et adapté pour pouvoir déplacer l'équipage principal (10) et l'équipage de compensation (15) l'un par rapport à l'autre en sens inverses selon chaque degré de liberté par rapport au support (13), l'équipage de compensation (15) et le dispositif (18, 28, 38) d'actionnement compensé étant adaptés pour minimiser la résultante des efforts de réaction induits sur le support (13) par les déplacements de l'équipage principal (10) et de l'équipage de compensation par rapport au support (13),
**caractérisé :**
- **en ce que** le dispositif (18, 28, 38) d'actionnement compensé est adapté pour imposer une position relative de l'équipage de compensation (15) par rapport à l'équipage principal (10),
- et **en ce qu'**il comporte un dispositif (14, 25, 40) de rappel de l'équipage principal (10) en une position, dite position nominale, par rapport au support (13) et/ou un dispositif (16, 26, 47) de rappel de l'équipage de compensation (15) en une position, dite position nominale, par rapport au support (13), le(s) dispositif(s) (14, 16, 25, 26, 40, 47) de rappel étant adapté(s) pour autoriser les déplacements relatifs de l'équipage principal (10) et de l'équipage de compensation (15) l'un par rapport à l'autre et par rapport au support (13) sous l'effet du dispositif (18, 28, 38) d'actionnement compensé, le(s) dispositif(s) (14, 16, 25, 26, 40, 47) de rappel étant aussi adaptés pour minimiser la résultante des efforts de réaction induits sur le support (13) par les déplacements de l'équipage principal (10) et de l'équipage de compensation par rapport au support (13).

2. Dispositif selon la revendication 1, **caractérisé en ce que** le support (13) est lui-même monté mobile par rapport au bâti (12) selon le(s) même(s) degré(s) de liberté de montage de l'équipage principal (10) et de l'équipage de compensation (15) par rapport au support (13), et **en ce qu'**il comprend un mécanisme (17, 19, 29, 37 , 39, 44, 45, 46) de montage du support (13) sur le bâti (12), ce mécanisme (17, 19, 29, 37 , 39, 44, 45, 46) de montage reliant le support (13) au bâti (12) et comprenant au moins un organe (19, 44) de rappel du support en une position, dite position nominale, par rapport au bâti (12).

3. Dispositif selon la revendication 2, **caractérisé en ce que** ledit mécanisme de montage est adapté pour absorber au moins pour partie les efforts de réactions résiduels impartis sur le support (13) par les déplacements de l'équipage principal (10) et de l'équipage de compensation (15) selon chaque degré de liberté.

4. Dispositif selon l'une des revendications 2 ou 3, **caractérisé en ce que** ledit mécanisme de montage comprend au moins un actionneur (19, 29, 39) motorisé apte à ajuster finement la position du support (13) par rapport au bâti (12), au moins un capteur d'efforts adapté pour délivrer un signal représentatif des efforts de réaction résiduels impartis sur le support par les déplacements de l'équipage principal (10) et de l'équipage de compensation (15) selon chaque degré de liberté, et un dispositif d'asservissement adapté pour délivrer un signal de commande de chaque actionneur motorisé de façon à modifier la position du support (13) par rapport au bâti (12) pour minimiser la transmission desdits efforts de réaction sur le bâti.

5. Dispositif selon l'une des revendications 2 à 4, **caractérisé en ce que** ledit mécanisme de montage comprend au moins un organe amortisseur (45) reliant le support (13) et le bâti (J 2).

6. Dispositif selon l'une des revendications 1 à 5, **caractérisé en ce que** l'équipage principal (10) et l'équipage de compensation (15) sont tous deux montés mobiles en translation selon un même axe (31) de translation par rapport au support (13).

7. Dispositif selon la revendication 6, **caractérisé en ce que** le centre de gravité de l'équipage principal (10) et le centre de gravité de l'équipage de compensation (15) sont situés sur l'axe (31) de translation et **en ce que** le dispositif d'actionnement (38) compensé comprend une pluralité d'actionneurs uniformément répartis autour de l'axe (31) de translation.

8. Dispositif selon l'une des revendications 1 à 7, **caractérisé en ce que** l'équipage principal (10) et l'équipage de compensation (15) sont tout deux montés en rotation autour d'un axe (11) de rotation par rapport au support (13).

9. Dispositif selon la revendication 8, **caractérisé en ce que** l'équipage principal (10) est équilibré autour de l'axe (11) de rotation, **en ce que** l'équipage de compensation (15) est équilibré autour de l'axe (11) de rotation, et **en ce que** le dispositif d'actionnement (18a, 18b) compensé comprend une pluralité d'actionneurs uniformément répartis autour de l'axe (11) de rotation.

10. Dispositif selon l'une des revendications 1 à 9, **caractérisé en ce que** le dispositif d'actionnement compensé comprend au moins un actionneur motorisé (18, 38) choisi parmi un actionneur piézo-électrique, un actionneur électromagnétique, un servo moteur électrique entraînant un système vis sans fin/écrou, un vérin, un moteur électrique.

11. Dispositif selon l'une des revendications 1 à 10, **caractérisé en ce que** le dispositif (18, 28, 38) d'actionnement compensé est relié uniquement à l'équipage principal (10) et à l'équipage de compensation (15) et interposé au moins fonctionnellement entre ces deux équipages mobiles.

12. Dispositif selon l'une de revendications 1 à 11, **caractérisé en ce que** l'équipage de compensation (15) présente les mêmes propriétés inertielles que l'équipage principal (10) par rapport à ses modes de déplacement par rapport au support (13).

13. Dispositif selon l'une des revendications 1 à 12, **caractérisé en ce qu'**il comprend un dispositif (14, 25, 40) de rappel élastique de l'équipage principal (10) en position nominale par rapport au support (13), et un dispositif (16, 26, 47) de rappel élastique de l'équipage de compensation (15) en position nominale par rapport au support (13), et **en ce que** lesdits dispositifs de rappel élastique (14, 16, 25, 26, 40, 47) sont adaptés pour exercer des efforts de rappel élastique de même amplitude et de sens inverses en toute position de l'équipage principal (10) et de l'équipage de compensation (15).

14. Dispositif selon l'une des revendications 1 à 13, **caractérisé en ce qu'**il comprend au moins un capteur (21) de position adapté pour délivrer un signal représentatif de la position de l'équipage principal (10) par rapport au bâti (12), et/ou au moins un capteur (22) de position adapté pour délivrer un signal représentatif de la position de l'équipage de compensation (15) par rapport au bâti (12), et/ou au moins un capteur (23) de position adapté pour délivrer un signal représentatif de la position du support (13) par rapport au bâti (12).

15. Instrument optique comprenant au moins un système optique présentant un axe optique, **caractérisé en ce qu'**il comprend au moins un dispositif selon l'une des revendications 1 à 14 d'ajustement de la position d'un organe du système optique par rapport à un bâti (12).

## Patentansprüche

1. Motorbetriebene Vorrichtung zur Einstellung der Position in Relation zu einem Rahmen (12), eines ersten Organs, bezeichnet als Hauptorgan (10), das mobil gemäß wenigstens einem Freiheitsgrad in Rotation und / oder in Translation in Relation zu einem Träger (13) montiert ist, der auf dem Rahmen (12) montiert ist, umfassend:
- ein zweites Organ, bezeichnet als Ausgleichsorgan (15), das mobil in Rotation und / oder in Translation in Relation zum Träger (13) derart montiert ist, dass es in Relation zu diesem letzteren gemäß demselben (denselben) Freiheitsgrad(en) verschoben werden kann wie das Hauptorgan (10), jedoch in umgekehrter Richtung,
und **dadurch gekennzeichnet, dass** es umfasst:
- eine motorbetriebene Vorrichtung, bezeichnet als kompensierte Vorrichtung (18, 28, 38) zur Betätigung, die an das Hauptorgan (10) und an das Ausgleichsorgan (15) angeschlossen ist, wobei diese Vorrichtung (18, 28, 38) zur kompensierten Betätigung unabhängig vom Rahmen (12) und dem Träger (13) ist und angepasst ist, um das Hauptorgan (10) und das Ausgleichsorgan (15) in Relation zueinander in umgekehrter Richtung gemäß jedem Freiheitsgrad in Relation zum Träger (13) verschieben zu können, wobei das Ausgleichsorgan (15) und die Vorrichtung (18, 28, 38) zur kompensierten Betätigung angepasst sind, um die Resultante der Reaktionsbeanspruchungen, die auf dem Träger (13) durch die Verschiebungen des Organs (10) und des Ausgleichsorgans in Relations zum Träger (13) induziert werden, zu minimieren,
**dadurch gekennzeichnet:**
- **dass** die genannte Vorrichtung (18, 28, 38) zur kompensierten Betätigung angepasst ist, um eine relative Position des Ausgleichsorgans (15) in Relation zum Hauptorgan (10) zu erzwingen,
- und **dass** sie eine Vorrichtung (14, 25, 40) zum Zurückholen des Hauptorgans (10) in eine Position, bezeichnet als nominale Position, in Relation zum Träger (13) und / oder eine Vorrichtung (16, 26, 47) zum Zurückholen des Ausgleichsorgans (15) in eine Position, bezeichnet als nominale Position, in Relation zum Träger (13) umfasst, wobei die Vorrichtung(en) (14, 16, 25, 26, 40, 47) zum Zurückholen angepasst sind, um die relativen Verschiebungen des Hauptorgans (10) und des Ausgleichsorgans (15) in Relation zueinander und in Relation zum Träger (13) unter der Wirkung der Vorrichtung (18, 28, 38) zur kompensierten Betätigung zu erlauben, wobei die Vorrichtung(en) (14, 16, 25, 26, 40, 47) zum Zurückholen ebenfalls angepasst sind, um die Resultante der Reaktionsbeanspruchungen zu minimieren, die auf dem Träger (13) durch die Verschiebungen des Hauptorgans (10) und des Ausgleichsorgans in Relation zum Träger (13) induziert werden.

2. Vorrichtung gemäß Anspruch 1, **dadurch gekennzeichnet, dass** der Träger (13) selbst mobil in Relation zum Rahmen (12) gemäß demselben (denselben) Montage-Freiheitsgrad(en) des Hauptorgans (10) und des Ausgleichsorgans (15) in Relation zum Träger (13) montiert ist und dass er einen Mechanismus (17, 19, 29, 37, 39, 44, 45, 46) zur Montage des Trägers (13) auf dem Rahmen (12) umfasst, wobei dieser Mechanismus (17, 19, 29, 37, 39, 44, 45, 46) zur Montage den Träger (13) mit dem Rahmen (12) verbindet und wenigstens ein Organ (19, 44) zum Zurückholen des Trägers in eine Position, bezeichnet als nominale Position, in Relation zum Rahmen (12) umfasst.

3. Vorrichtung gemäß Anspruch 2, **dadurch gekennzeichnet, dass** der genannte Mechanismus zur Montage angepasst ist, um wenigstens zum Teil die restlichen Reaktionsbeanspruchungen zu absorbieren, die auf dem Träger (13) durch die Verschiebungen des Hauptorgans (10) und des Ausgleichsorgans (15) gemäß jedem Freiheitsgrad festgesetzt sind.

4. Vorrichtung gemäß Anspruch 2 oder 3, **dadurch gekennzeichnet, dass** der genannte Mechanismus zur Montage wenigstens ein motorisiertes Wirkglied (19, 29, 39), das angepasst ist, um die Position des Trägers (13) in Relation zum Rahmen (12) fein anzupassen, wenigstens einen Beanspruchungs-Messfühler, der angepasst ist, um ein Signal auszugeben, das restliche Reaktionsbeanspruchungen darstellt, die auf dem Träger durch die Verschiebungen des Hauptorgans (10) festgesetzt sind, und des Ausgleichsorgans (15) gemäß jedem Freiheitsgrad, und eine Regelungsvorrichtung, die angepasst ist, um ein Steuersignal jedes motorisierten Wirkgliedes derart auszugeben, dass die Position des Trägers (13) in Relation zum Rahmen (12) geändert wird, um die Übertragung der genannten Reaktionsbeanspruchungen auf dem Rahmen zu minimieren, umfasst.

5. Vorrichtung gemäß Anspruch 2 bis 4, **dadurch gekennzeichnet, dass** der genannte Mechanismus zur Montage wenigstens ein Dämpferorgan (45) umfasst, das den Träger (13) und den Rahmen (12) miteinander verbindet.

6. Vorrichtung gemäß Anspruch 1 bis 5, **dadurch gekennzeichnet, dass** das Hauptorgan (10) und das Ausgleichsorgan (15) alle beide mobil in Translation gemäß einer und derselben Translationsachse (31) in Relation zum Träger (13) montiert sind.

7. Vorrichtung gemäß Anspruch 6, **dadurch gekennzeichnet, dass** der Schwerpunkt des Hauptorgans (10) und der Schwerpunkt des Ausgleichsorgans (15) sich auf der Translationsachse (31) befinden und dass die Vorrichtung (38) zur kompensierten Betätigung eine Vielzahl von uniform um die Translationsachse (31) verteilten Wirkglieder umfasst.

8. Vorrichtung gemäß Anspruch 1 bis 7, **dadurch gekennzeichnet, dass** das Hauptorgan (10) und das Ausgleichsorgan (15) alle beide in Rotation um die Rotationsachse (11) in Relation zum Träger (13) montiert sind.

9. Vorrichtung gemäß Anspruch 8, **dadurch gekennzeichnet, dass** das Hauptorgan (10) um die Rotationsachse (11) ausgeglichen ist, dass das Ausgleichsorgan (15) um die Rotationsachse (11) ausgeglichen ist und dass die Vorrichtung (18a, 18b) zur kompensierten Betätigung eine Vielzahl von uniform um die Rotationsachse (11) verteilten Wirkgliedern umfasst.

10. Vorrichtung gemäß Anspruch 1 bis 9, **dadurch gekennzeichnet, dass** die Vorrichtung zur kompensierten Betätigung wenigstens ein motorisiertes Wirkglied (18, 38) umfasst, das aus einem piezoelektrischen Wirkglied, einem elektromagnetischen Wirkglied, einem Servomotor, der ein System Endlosschnecke / Mutter, einen Zylinder, einen Elektromotor antreibt, ausgewählt ist.

11. Vorrichtung gemäß Anspruch 1 bis 10, **dadurch gekennzeichnet, dass** die Vorrichtung (18, 28, 38) zur kompensierten Betätigung ausschließlich an das Hauptorgan (10) und an das Kompensationsorgan (15) angeschlossen und wenigstens funktional zwischen diesen zwei mobilen Organen zwischengeschaltet ist.

12. Vorrichtung gemäß Anspruch 1 bis 11, **dadurch gekennzeichnet, dass** das Ausgleichsorgan (15) dieselben Trägheitseigenschaften wie das Hauptorgan (10) in Relation zu seinen Verschiebungsmodi in Relation zum Träger (13) aufweist.

13. Vorrichtung gemäß Anspruch 1 bis 12, **dadurch gekennzeichnet, dass** sie eine elastische Vorrichtung (14, 25, 40) zum Zurückholen des Hauptorgans (10) in die nominale Position in Relation zum Träger (13) und eine elastische Vorrichtung (16, 26, 47) zum Zurückholen des Ausgleichsorgans (15) in die nominale Position in Relation zum Träger (13) umfasst und dass die genannten elastischen Vorrichtungen zum Zurückholen (14, 16, 25, 26, 40, 47) angepasst sind, um elastische Rückholbeanspruchungen derselben Amplitude und in umgekehrter Richtung in jeder Position des Hauptorgans (10) und des Ausgleichsorgans (15) auszuüben.

14. Vorrichtung gemäß Anspruch 1 bis 13, **dadurch gekennzeichnet, dass** sie wenigstens einen Positionssensor (21), der angepasst ist, um ein Signal auszugeben, das die Position des Hauptorgans (10) in Relation zum Rahmen (12) darstellt, und / oder wenigstens einen Positionssensor (22), der angepasst ist, um ein Signal auszugeben, das die Position des Ausgleichsorgans (15) in Relation zum Rahmen (12) darstellt, und /oder wenigstens einen Positionssensor (23), der angepasst ist, um ein Signal auszugeben, das die Position des Trägers (13) in Relation zum Rahmen (12 darstellt, umfasst.

15. Optisches Instrument, umfassend wenigstens ein optisches System, das eine optische Achse umfasst, **dadurch gekennzeichnet, dass** es wenigstens eine Vorrichtung gemäß Anspruch 1 bis 14 zur Anpassung der Position eines Organs des optischen Systems in Relation zu einem Rahmen (12) umfasst.

## Claims

1. Motorised device for adjusting the position, in relation to a frame (12), of a first member, called the principal member (10), mounted in mobile manner with at least one degree of freedom in rotation and/or translation in relation to a support (13) mounted on the frame (12), comprising:
- a second member, called the compensating member (15), mounted in mobile manner in rotation and/or in translation in relation to the support (13) so as to be capable of being displaced in relation to said support with the same degree(s) of freedom as the principal member (10) but in opposite directions,
and **characterised in that** it comprises:
- a motorised device, called the compensated actuating device (18, 28, 38), connected to the principal member (10) and to the compensating member (15), this compensated actuating device (18, 28, 38) being independent of the frame (12) and of the support (13) and suitable to be capable of displacing the principal member (10) and the compensating member (15) in relation to one another in opposite directions in each degree of freedom in relation to the support (13), the compensating member (15) and the compensated actuating device (18, 28, 38) being suitable to minimise the resultant of the reaction forces induced on the support (13) by the displacements of the principal member (10) and of the compensating member in relation to the support (13),
**characterised:**
- **in that** the compensated actuating device (18, 28, 38) is suitable to impose a relative position of the compensating member (15) in relation to the principal member (10),
- and **in that** it includes a device (14, 25, 40) for returning the principal member (10) into a position, called the nominal position, in relation to the support (13) and/or a device (16, 26, 47) for returning the compensating member (15) into a position, called the nominal position, in relation to the support (13), the return device(s) (14, 16, 25, 26, 40, 47) being suitable to permit the relative displacements of the principal member (10) and of the compensating member (15) in relation to one another and in relation to the support (13) under the action of the compensated actuating device (18, 28, 38), the return device(s) (14, 16, 25, 26, 40, 47) also being suitable to minimise the resultant of the reaction forces induced on the support (13) by the displacements of the principal member (10) and of the compensating member in relation to the support (13).

2. Device according to Claim 1, **characterised in that** the support (13) is itself mounted in mobile manner in relation to the frame (12) with the same degree(s) of freedom of mounting of the principal member (10) and of the compensating member (15) in relation to the support (13), and **in that** it includes a mechanism (17, 19, 29, 37, 39, 44, 45, 46) for mounting the support (13) on the frame (12), this mounting mechanism (17, 19, 29, 37, 39, 44, 45, 46) connecting the support (13) to the frame (12) and including at least one component (19, 44) for returning the support into a position, called the nominal position, in relation to the frame (12).

3. Device according to Claim 2, **characterised in that** said mounting mechanism is suitable to absorb, at least in part, the residual reaction forces imparted to the support (13) by the displacements of the principal member (10) and of the compensating member (15) in each degree of freedom.

4. Device according to one of Claims 2 or 3, **characterised in that** said mounting mechanism includes at least one motorised actuator (19, 29, 39) which is capable of finely adjusting the position of the support (13) in relation to the frame (12), at least one force sensor which is suitable to output a signal that is representative of the residual reaction forces imparted to the support by the displacements of the principal member (10) and of the compensating member (15) in each degree of freedom, and an automatic-control device which is suitable to output a control signal pertaining to each motorised actuator so as to modify the position of the support (13) in relation to the frame (12) in order to minimise the transmission of said reaction forces to the frame.

5. Device according to one of Claims 2 to 4, **characterised in that** said mounting mechanism includes at least one damping component (45) connecting the support (13) and the frame (12).

6. Device according to one of Claims 1 to 5, **characterised in that** the principal member (10) and the compensating member (15) are both mounted in mobile manner in translation along the same translation axis (31) in relation to the support (13).

7. Device according to Claim 6, **characterised in that** the centre of gravity of the principal member (10) and the centre of gravity of the compensating member (15) are situated on the translation axis (31) and **in that** the compensated actuating device (38) includes a plurality of actuators distributed uniformly about the translation axis (31).

8. Device according to one of Claims 1 to 7, **characterised in that** the principal member (10) and the compensating member (15) are both mounted in rotation about a rotation axis (11) in relation to the support (13).

9. Device according to Claim 8, **characterised in that** the principal member (10) is balanced about the rotation axis (11), **in that** the compensating member (15) is balanced about the rotation axis (11), and **in that** the compensated actuating device (18a, 18b) includes a plurality of actuators distributed uniformly about the rotation axis (11).

10. Device according to one of Claims 1 to 9, **characterised in that** the compensated actuating device includes at least one motorised actuator (18, 38) selected from a piezoelectric actuator, an electromagnetic actuator, an electric servo motor driving an endless-screw/nut system, a jack, an electric motor.

11. Device according to one of Claims 1 to 10, **characterised in that** the compensated actuating device (18, 28, 38) is connected solely to the principal member (10) and to the compensating member (15) and interposed at least functionally between these two mobile members.

12. Device according to one of Claims 1 to 11, **characterised in that** the compensating member (15) exhibits the same inertial properties as the principal member (10) in relation to its modes of displacement in relation to the support (13).

13. Device according to one of Claims 1 to 12, **characterised in that** it includes a device (14, 25, 40) for elastic return of the principal member (10) into the nominal position in relation to the support (13), and a device (16, 26, 47) for elastic return of the compensating member (15) into the nominal position in relation to the support (13), and **in that** said elastic-return devices (14, 16, 25, 26, 40, 47) are suitable to exert elastic-return forces of the same amplitude and with opposite directions into any position of the principal member (10) and of the compensating member (15).

14. Device according to one of Claims 1 to 13, **characterised in that** it includes at least one position sensor (21) which is suitable to output a signal that is representative of the position of the principal member (10) in relation to the frame (12), and/or at least one position sensor (22) which is suitable to output a signal that is representative of the position of the compensating member (15) in relation to the frame (12), and/or at least one position sensor (23) which is suitable to output a signal that is representative of the position of the support (13) in relation to the frame (12).

15. Optical instrument including at least one optical system exhibiting an optical axis, **characterised in that** it includes at least one device according to one of Claims 1 to 14 for adjusting the position of a component of the optical system in relation to a frame (12).
